# EUROPÄISCHE PATENTSCHRIFT

(11) **EP 2 197 667 B1**
(45) Veröffentlichungstag und Bekanntmachung des Hinweises auf die Patenterteilung: **30.11.2011**
(21) Anmeldenummer: 08799946.2
(22) Anmeldetag: 03.10.2008
(51) Int. Cl.: B32B 5/20, E04C 2/20, E04C 2/24

(54) **VERBUNDPLATTE MIT EXPANDIERTEN MIKROSPHÄREN**
COMPOSITE BOARD HAVING EXPANDED MICROSPHERES
PANNEAU COMPOSITE DOTÉ DE MICROSPHÈRES EXPANSÉES

(30) Priorität: 11.10.2007 AT 16332007
(43) Veröffentlichungstag der Anmeldung: 23.06.2010
(73) Patentinhaber: Isosport Verbundbauteile Gmbh, 7000 Eisenstadt (AT)
(72) Erfinder: BRAUN, Andreas, A-7100 Neusiedl am See (AT); MIKATS, Günther, A-7024 Hirm (AT)
(74) Vertreter: Torggler, Paul Norbert
(86) Internationale Anmeldenummer: PCT/AT2008/000357
(87) Internationale Veröffentlichungsnummer: WO 2009/046470

(56) Entgegenhaltungen:
- WO-A-01/55524
- DE-A1- 19 531 631
- US-A1- 2002 132 100

## Beschreibung

Die Erfindung betrifft eine Verbundplatte aus einer Kernschicht und mindestens einer mit der Kernschicht verbundenen Verbundschicht, wobei die Kernschicht ein geschäumter Kunststoff ist.

Weiters soll ein Verfahren zur Herstellung der erfindungsgemäßen Verbundplatte angegeben werden.

Bekannt sind bereits Verbundplatten, die unter anderem im Baubereich eingesetzt werden. Verschiedene Schaumtechnologien kommen bereits zum Einsatz, um die Dichte der Platten zu verringern und sie dadurch leichter zu machen. Üblicherweise werden Thermoplaste, die den Hauptbestandteil solcher Verbundplatten bilden, durch Injektion von unter Druck stehenden, niedrig siedenden Flüssigkeiten oder Gasen oder durch Zugabe einer Chemikalie, die während ihrer Zersetzung im Schäumprozess Gase freigibt, geschäumt. Bei diesen Technologien müssen bestimmte technologische und stoffliche Bedingungen geschaffen werden, um das Polymer-Gas-Gemisch unter Druck in Lösung zu halten und ein Aufschäumen erst bei der Ausformung zuzulassen. Das Polymer-Gas-Gemisch ist sehr niedrigviskos und muss gekühlt werden, damit die Viskosität wieder zunimmt und eine vernünftige Ausformung möglich ist. Dies ist meist mit sehr hohem technischem Aufwand verbunden. Auch nach Austritt aus dem Werkzeug (z. B. Extruder) muss die Schaumoberfläche sofort gekühlt werden, damit der Kunststoff erstarrt und stabile Zellen bildet, aus denen das Treibgas vorerst nicht entweicht. Bei dickeren Platten kann die Mitte der Platte nicht gekühlt werden, wodurch mit zunehmendem Verschäumungsgrad instabile Zellen aufplatzen und diese mit anderen Zellen eine große Zelle bilden. Es entstehen somit offenzellige Schäume mit unterschiedlichen Zellgrößen über die Produktdicke. Dies führt im Allgemeinen - und speziell bei dicken Platten - zu geringeren und ungleichmäßigen mechanischen Festigkeiten. Das Gas diffundiert anschließend aus dem offenzelligen Schaum und die Zellen füllen sich mit Luft. Geschlossenzellige Schäume können in solchen Prozessen nur durch Vernetzung der Polymermatrix erreicht werden. Bei chemisch geschäumten dicken Platten werden heute üblicherweise Verschäumungsgrade von ca. 40%, das führt z.B. bei Polypropylen zu einer Kernschichtdichte von 550 kg/m³, erreicht.

Die Aufgabe der Erfindung liegt nun darin, eine Verbundplatte herzustellen, welche leichter und dennoch stabil ist. Darüber hinaus sollen die Blasen in der Kernschicht homogener verteilt sein.

Dies wird bei der erfindungsgemäßen Verbundplatte dadurch erreicht, dass der geschäumte Kunststoff der Kernschicht expandierte Mikrosphären enthält und beidseitig dieser Kernschicht eine Verbundschicht angeordnet ist, die jeweils eine Verstärkungsschicht und eine Deckschicht aufweist, wobei der Durchmesser der Mikrosphären in expandiertem Zustand in der Kernschicht zwischen 30 µm und 200 µm beträgt.

Mikrosphären sind gasgefüllte Polymerhüllen, die sich bei Temperatureinwirkung wie ein Luftballon aufblasen und somit Schaumstrukturen in einem Polymer bzw. in der Kernschicht bilden. Mikrosphären werden pulverförmig oder als Masterbatch wie chemische Treibmittel dosiert. Die gasdicht abschließenden Polymerhüllen der Mikrosphären erweichen während der thermoplastischen Verarbeitung, die in den Mikrosphären vorhandene niedrigsiedende Flüssigkeit verdampft, der Gasinnendruck steigt und bläst die Mikrosphären ähnlich einem Luftballon auf. Während der Verarbeitung muss darauf geachtet werden, die Polymerhüllen der Mikrosphären möglichst schonend zu behandeln, um sie nicht zu zerstören. Dies erfordert gerade bei der Verarbeitung von Massekunststoffen, deren Schmelz- oder Erweichungstemperatur zwischen 130°C und 220°C - und somit im Bereich der Expansionstemperatur der Mikrosphären - liegt, hohes technisches Know-How, da bereits im Extrusionsprozess befindliche expandierte Mikrosphären sehr zerstörungsempfindlich sind. Im Idealfall expandieren die Mikrosphären beim Austritt aus dem Werkzeug und blähen die Grundmatrix zu geschlossenzelligen Schäumen mit sehr kleinen Zellen und gleichmäßiger Zellgrößenverteilung über die Produktdicke auf, wobei der nicht integrale, isotrope Schaum besonders unter dem Mikroskop von den üblichen, begasten Schäumen unterscheidbar ist. Die Zellwände der expandierten Hohlkörper nehmen weitestgehend Kugelform an und bleiben bei guter Verarbeitung durchwegs erhalten. Auch bei dicken Platten werden Verschäumgrade bis zu ca. 70%, das z. B. bei Polypropylen zu einer Kernschichtdichte von ca. 300 kg/m³ führt, erreicht. Die gleichmäßigen Zellgrößen und gleichmäßige Dichteverteilung führen zu hoher mechanischer Stabilität der Produkte. Die geschlossenzellige Schaumstruktur bietet Darüber hinaus den Vorteil, dass der Polymerschaum eine bessere Dämmwirkung gegen Wärme und Strom aufweist und die Wasseraufnahme unterbindet.

Damit sich generell stabile Zellwände und folglich feinporige Schaumstrukturen ausbilden können, werden sowohl beim Schäumen mit chemischen als auch physikalischen Treibmitteln entweder vernetzbare Polymere oder Polymere mit hoher Schmelzesteifigkeit eingesetzt. Die bisher bekannten Schaumstrukturen mit unvernetzten Polymeren sind immer offenzellig, haben große Zelldurchmesser und die Zellen haben eine hexagonale Form. In aufwendigen Vernetzungsprozessen sind geschlossenzellige Schäume mit 100 µm Zelldurchmesser und hexagonalen Zellformen machbar. Dahingegen zeichnet sich ein bevorzugter Mikrosphärenschaum durch kugelförmige Zellen mit 50 bis 200 µm Durchmesser aus. Bei der Schaumstruktur des chemisch geschäumten Schaumkems ist der durchschnittliche Zellendurchmesser zwischen 400 und 1000 µm.

Gemäß einer bevorzugten Ausführungsform einer Verbundplatte besteht die Kernschicht zumindest aus einer Grundmasse und expandierten Mikrosphären. Die Grundmasse kann auch aus voneinander verschiedenen Kunststoffen bestehen. Beispielsweise kann ein hochwertiges Polyproypylen mit einer anderen Art Polypropylen als Grundmasse eingesetzt werden. Eine andere bevorzugte Ausführungsform sieht vor, dass die Kernschicht aus zumindest einer Grundmasse, expandierten Mikrosphären und einem Trägermaterial besteht. Welche Ausführungsform zur Anwendung kommt, hängt davon ab, in welcher Form die Grundmasse zur Verfügung steht. Die gleichmäßige Vermischung von Grundmasse und Mikrosphären ist bei gleicher Partikelgröße am besten gegeben. Liegt die Grundmasse in Pulverform vor, können die pulverförmigen Mikrosphären direkt mit der Grundmasse vermischt werden. Liegt dagegen die Grundmasse z. B. granulatförmig vor, so werden die Mikrosphären durch ein Trägermaterial gebunden, wodurch eine ebenfalls granulatförmige Masse entsteht.

Im Falle der Mischung von Granulat mit Granulat werden die Mikrosphären in einem der Verbundplattenherstellung vorgelagerten Prozess an ein Trägermaterial gebunden. So entsteht ein Masterbatch. Der Einsatz dieses Masterbatches in der Verbundplattenherstellung garantiert eine homogenere Verteilung der Mikrosphären in der Grundmasse.

Als vorteilhaft hat es sich herausgestellt, wenn die Grundmasse aus einem Thermoplasten, vorzugsweise Polypropylen bzw. anderen Thermoplasten besteht, die zwischen 120°C und 250°C verarbeitet werden.

Weiters ist vorgesehen, dass die expandierten Mikrosphären eine Polymerhülle, welche beispielsweise aus einem thermoplastischen Kunststoff besteht, aufweisen. Beispielsweise können die Mikrosphären eine Polymerhülle aufweisen, welche aus Polyvinylidenfluorid, Polyvinylidenchlorid, Polymethylmetacrylat, Polyacrylatnitril u.ä. besteht.

Weiters ist vorgesehen, dass die Mikrosphären mit einer ausdehnbaren flüssigen oder gasförmigen Substanz gefüllt sind. Vor allem ist vorteilhaft, wenn als flüssige oder gasförmige Substanz eine bei niedriger Temperatur siedende Flüssigkeit wie beispielsweise isobutan, Isopentan oder Isooktan verwendet wird.

Weiters kann vorgesehen sein, dass als Trägermaterial für die Masterbatchherstellung Ethylenvinylacetat dient. Ebenso kann vorgesehen sein, dass als Mikrosphärenträger für den Masterbatch ähnliche niedrig schmelzende Thermoplastträgermaterialien Verwendung finden.

Besonders vorteilhaft ist es, wenn die Kernschicht extrudiert ist. Durch die Extrusion wird die komplette Masse unter gleichmäßigem Druck und gleichmäßiger Wärmeeinwirkung aus einer Breitschlitzdüse extrudiert, wodurch eine regelmäßige Kernschicht für die Verbundplatte entsteht. Diese vorteilhafte Ausführungsform soll allerdings nicht ausschließen, dass eine Verbundplatte nicht auch durch ein Spritzgussverfahren herstellbar ist.

Als vorteilhafte Mischverhältnisse zur Herstellung der Kernschicht hat sich dabei herausgestellt, dass die Kernschicht zu 80 bis 99,9 % aus der Grundmasse und zu 0,1 bis 20 % aus dem Masterbatch besteht, wobei dieser Masterbatch zu 20 bis 70 % aus den Mikrosphären und zu 30 bis 80 % aus dem Trägermaterial besteht. Der Anteil der Mikrosphären, die in die Grundschicht eingebracht werden, kann variiert werden, wodurch auf die Schaumdichte gezielt Einfluss genommen wird. Dies ist insofern wichtig, da die mechanischen Werte von Kernschichten bzw. Verbundplatten im Wesentlichen von deren Dichte abhängen. Durch die Anwendung der Mikrosphären-Technologie kann somit nicht nur das Gewicht der Platte sondern auch deren mechanische Eigenschaften entsprechend den Kundenanforderungen eingestellt werden. Die feinzellige, homogene Schaumstruktur des Mikrosphärenschaums wirkt sich dabei besonders vorteilhaft auf den Elastizitätsmodul, also auf die Steifigkeit der Platte aus. Verbundplatten mit einer Kernschicht, die Mikrosphären aufweisen und eine Schaumdichte von 500 kg/m³ haben, erzielen in etwa den gleichen Elastizitätsmodul wie chemisch geschäumte Platten der Dichte von 680 kg/m³.

Als vorteilhaft hat sich des Weiteren herausgestellt, wenn die Kernschicht zusätzlich ein chemisches oder physikalisches Treibmittel aufweist. Chemische Treibmittel sind thermisch instabile Feststoffe, die wie schon zuvor beschrieben unter der Wärmeeinwirkung während der Verarbeitung - z.B. durch einen Extruder - durch chemische Reaktion in zumindest ein Gas zerfallen. Verwendung als chemische Treibmittel finden z.B. Ammoniumkarbonat, Natriumbikarbonat, Azodicarbonamid u.ä. Wie bei allen Treibmitteln ist auf eine exakte Dosierung zu achten. Als physikalische Treibmittel werden häufig niedrig siedende Flüssigkeit wie beispielsweise Isobutan, Isopentan oder Isooktan oder Inertgase wie N₂ oder CO₂ verwendet.

Vorteilhaft kann dabei vorgesehen sein, dass die Kernschicht neben den Mikrosphären einen Anteil an Treibmittel von 0,01 bis 5 % aufweist.

Im Generellen ist vorgesehen, dass die Kernschicht eine Dichte von 200 bis 800 kg/m³, vorzugsweise von 300 bis 650 kg/m³, aufweist. Im Speziellen weist eine Verbundplatte, die im Schalungsbereich Anwendung findet, eine Schaumdichte von 580 kg/m³ auf und eine Verbundplatte, die im Transportbereich eingesetzt wird, eine Schaumdichte von 420 kg/m³. Die Kernschicht kann vorteilhafterweise Dicken zwischen 1 und 60 mm, bevorzugt zwischen 6 und 30 mm, aufweisen. Aufgrund der gleichmäßigen feinzelligen Schaumstruktur über die gesamte Plattendicke werden - im Gegensatz zum Stand der Technik - speziell bei dicken Platten auch in der Plattenmitte gute mechanische Eigenschaften erzielt.

Eine vorteilhafte Ausführungsform sieht vor, dass die mindestens eine Verbundschicht aus Metall (z. B. Aluminumbleche, Metallgitter), Glas (z. B. Glasmatten), Glasfasern, einem nicht geschäumten Kunststoff, beispielsweise PP, oder einem anderen - zur Kernschicht verschiedenen - Material besteht. Je nach Anwendungsbereich der Verbundplatte kann die Verbundschicht an die gewünschte Funktionalität (z. B. hohe Stabilität) angepasst werden. Die Haftung der Verbundschichten zueinander wird über Haftvermittlersysteme oder ein Vlies erreicht, wobei alle verklebbaren Plattenmaterialien Anwendung finden können. Generell können auch andere bekannte Verbindungsarten außer Kleben oder Koextrudieren dem Verbinden der einzelnen Schichten dienen.

Vorteilhaft kann natürlich vorgesehen sein, dass die Verbundschicht beidseitig auf die Kernschicht aufgebracht ist.

Eine besonders vorteilhafte Ausführungsform sieht vor, dass die Verbundschicht - vorzugsweise aus nicht geschäumtem Polypropylen - mit der Kernschicht koextrudiert ist. Durch diese Ausführungsform wird eine sehr stabile Verbindung zwischen Verbundschicht und Kernschicht hergestellt, da sie während der Extrusion in Schmelzeform bereits in Verbindung treten. Beim Abkühlen nach der Koextrusion gehen die Polymerketten der Verbundschicht und der Kernschicht - zumindest an den Kontaktbereichen - eine Verbindung ein. Durch die höhere Dichte des nichtgeschäumten Bereichs (Verbundschicht) wird der Verbundplatte somit zusätzliche Stabilität verliehen.

Um die Funktionalität den jeweiligen Anwendungsbereichen anzupassen, kann vorgesehen sein, dass auf beide Verbundschichten je zumindest eine weitere Verbundschicht aufgebracht ist. Durch diese Ausführungsform entsteht eine Fünf-Schicht-Sandwichplatte, wobei die auf der Kernschicht befindliche Verbundschicht wie oben erwähnt beispielsweise aus Glasmatten, einem Metallgitter, Aluminium o. Ä. besteht.

Darüber hinaus sieht ein Ausführungsbeispiel vor, dass auf die Verbundschicht zusätzlich eine Oberflächenfolie aufkaschiert ist. Durch eine solche Ausführungsform entsteht ein Sieben-Schicht-Aufbau, der bei Einsatz von speziell kratzfesten oder regenerierbaren bzw. austauschbaren Oberflächenfolien z.B. im Schalungsbereich für fehlerlose Betonoberflächen sorgt.

Gemäß einem weiteren Aspekt der Erfindung wird der Schutz für ein Verfahren zur Herstellung einer Kernschicht für eine Verbundplatte begehrt, wobei nicht expandierte, mit einer ausdehnbaren Substanz gefüllte, Mikrosphären mit einer Grundmasse vermischt wird und anschließend diese Mischung zu einer festen, geschäumten Kernschicht extrudiert wird, wobei durch die Wärmeeinwirkung die Mikrosphären expandieren. Als besonders vorteilhaft hat sich dabei herausgestellt, wenn die Verarbeitungstemperatur unter 250°C liegt. Das impliziert, dass die Grundmasse vorzugsweise aus einem Thermoplast mit einer Schmelztemperatur von unter 250°C bestehen sollte. Andere Thermoplaste die als Grundmasse außer PP auch verwendet werden können, sind PE, PS, ABS, SAN, etc.. Vorteilhaft kann bei diesem Verfahren auch vorgesehen sein, dass die Mikrosphären mit einem Trägermaterial in einem der Plattenproduktion vorgelagerten Prozess zu einem Masterbatch verbunden werden. Vorteilhaft ist des Weiteren vorgesehen, dass das Trägermaterial EVA oder ähnliche niedrig schmelzende Thermoplastträgermaterialien sind.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen
- Fig. 1: eine ausschnittsweise Explosionszeichnung einer Fünf-Schicht-Sandwichplatte,
- Fig. 2a-2f: schematische Querschnitte von verschieden aufgebauten Verbundplatten,
- Fig. 3: eine unexpandierte und expandierte Mikrohohlkugel in Gegenüberstellung,
- Fig. 4: einen schematischen Ablauf des Verfahrens zur Herstellung einer Verbundplatte und
- Fig. 5a + 5b: einen schematischen Ablauf des Verfahrens zur Herstellung einer koextrudierten Verbundplatte.

Zu den folgenden Figurenbeschreibungen ist anzumerken, dass die Verbundschicht(en) 3 als Deckschicht(en) 3a und/oder Verstärkungsschicht(en) 3b und/oder Oberflächenfolie(n) 3c und/oder Zwischenschicht(en) 3d bezeichnet werden. Die Verbundschicht 3 kann somit in jeder dieser vier Arten einen Teil der Verbundplatte 1 bilden.

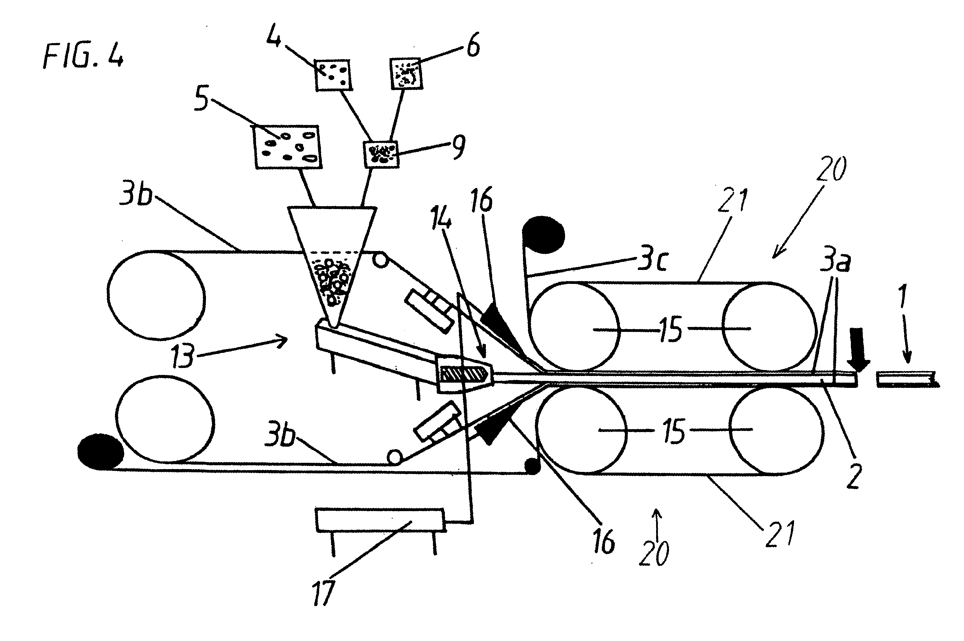

In Fig. 4 ist im linken oberen Bereich schematisch ersichtlich, wie die einzelnen Komponenten der Kernschicht vor dem Extrudieren zusammengefügt werden. Hierbei ist angedeutet, wie die Mikrosphären 4 mit dem Trägermaterial 6 und anderen Additiven in einem der Plattenherstellung vorgelagerten Prozess zu einem Masterbatch 9 verarbeitet werden. Dieser Masterbatch 9 wird dann gemeinsam mit der Grundmasse 5 in den Extruder 13 gebracht. In diesem Extruder 13 werden diese Komponenten durch Druck und Wärmeeinwirkung zu einer Kernschicht 2 für die Verbundplatte 1 extrudiert und in der Breitschlitzdüse 14 ausgeformt. In dieser Skizze ist dargestellt, wie über eine Rollenabwicklung und Bahnsteuerung eine Verstärkungsschicht 3b, die beispielsweise aus Aluminium oder Glasfasermatten besteht, auf die extrudierte Kernschicht 2 aufgebracht wird. Auf diese Verstärkungsschicht 3b wird über die Breitschlitzdüsen 16 eine Deckschicht 3a in Form einer Thermoplastbeschichtung koextrudiert. Zusätzlich wird eine Oberflächenfolie 3c mittels der Doppelbandpresse 20 auf die Deckschicht 3a aufkaschiert. Die Bänder 21 der Doppelbandpresse 20 sind um die Rollen 15 geführt, wobei durch die Rollen 15 und dem jeweiligen Band 21 auf beiden Seiten der Verbundplatte 1 großflächig Anpressdruck erzeugbar ist. Im Bereich nach bzw. rechts von den Rollen 15 werden die Verbundplatten 1 in gewünschter Länge abgeschnitten. In Fig. 4 ist somit insgesamt ein 7-Schicht-Aufbau dargestellt.

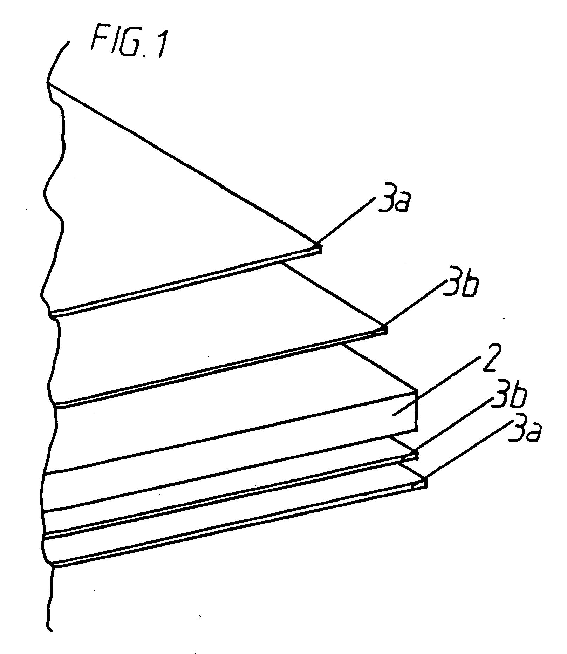

Fig. 1 zeigt explosionsartig den Aufbau einer Fünf-Schicht-Sandwichplatte, wobei sich in der Mitte die Kernschicht 2 befindet, die von der Verstärkungsschicht 3b umhüllt wird, auf welchen sich wiederum die Deckschichten 3a befinden.

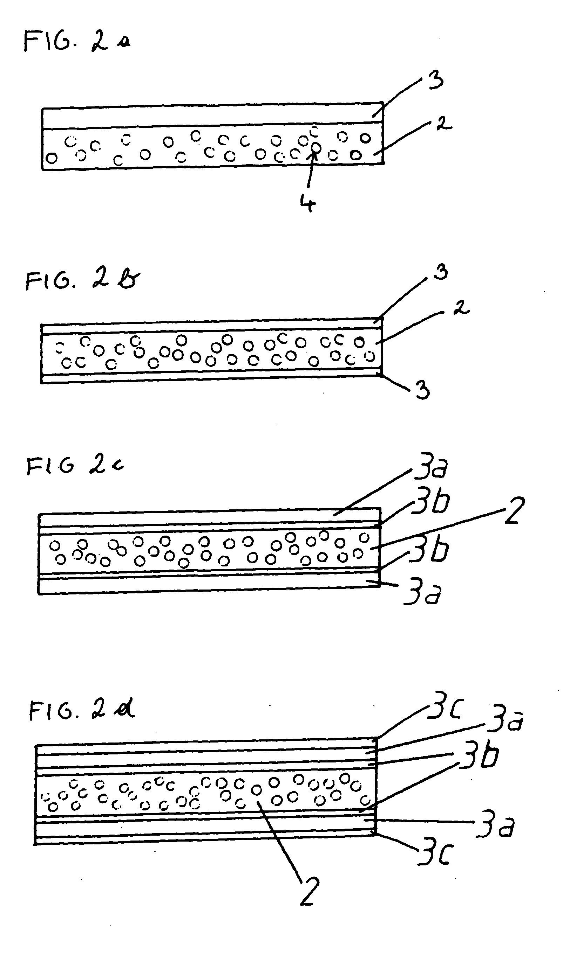

Die Fig. 2a bis 2d zeigen mögliche Ausführungsformen der Verbundplatte. Fig. 2a zeigt dabei eine einfache Ausführung der Verbundplatte mit einer Kernschicht 2, welche Mikrosphären 4 aufweist, und der darauf angebrachten Verbundschicht 3. Fig. 2b zeigt eine Kernschicht 2 mit beidseitig angebrachten Verbundschichten 3, wobei die Verbundschichten 3 aus Kunststoff (Thermo- oder Duroplast), aus Kunststoffbändchengeweben, aus Metallen wie Aluminium oder Stahl oder sonstigen Materialien gebildet sein können.

In Fig. 2c ist zwischen den Deckschichten 3a und der Kernschicht 2 die Verstärkungsschicht 3b angebracht. Dabei kann die Verstärkungsschicht 3b aus Stahlblechen oder Stahlgittern, Aluminiumblechen oder -gittern, Glasfasern, Glasgelegen, etc. bestehen. Die Deckschicht 3a kann aus Thermoplasten, Duroplasten, Kunstststoffbändchengeweben oder ähnlichem bestehen. In Fig. 2d wird die Deckschicht 3a zusätzlich durch die Oberflächenfolien 3c geschützt.

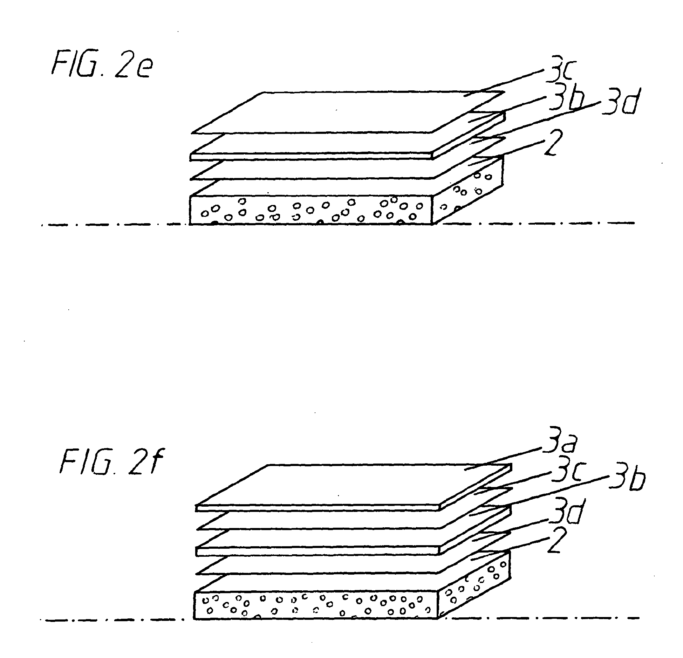

In Fig. 2e ist ein bevorzugter Aufbau einer Verbundplatte 1 gezeigt, wobei nur eine Seite der Verbundplatte 1 dargestellt ist, da sich der zweite Teil unterhalb der Symmetrielinie spiegelt. Vorteilhaft für das Gewicht und die Steifigkeit dieser Platte ist, wenn die Verstärkungsschicht 3b aus Aluminium besteht, wobei dessen Dicke zwischen 0,2 bis 2 mm (je nach Anforderung) beträgt. Zwischen Kernschicht 2 und Verstärkungsschicht 3b kann eine Zwischenschicht 3d aus Polypropylen-Primer mit einer Dicke von 13 µm angeordnet sein. Weiters kann als Oberflächenfolie 3c ein Epoxitlack mit einer Dicke von 4 µm dienen. Hierbei ist nicht unbedingt eine Deckschicht 3a nötig, kann jedoch wie in Fig. 2f zusätzlich beispielsweise in Form eines 1 bis 2 mm dicken Kunststoffes aufgebracht werden. Somit muss die erfindungsgemäße Verbundplatte 1 nicht unbedingt eine Deckschicht 3a aufweisen, sondern kann auch einen anderen fünfschichtigen oder siebenschichtigen (Fig. 2e) Aufbau aufweisen, wobei die Oberflächenfolie 3c bzw. ein Epoxitlack sozusagen als Deckschicht direkt auf der Verstärkungsschicht 3b dient.

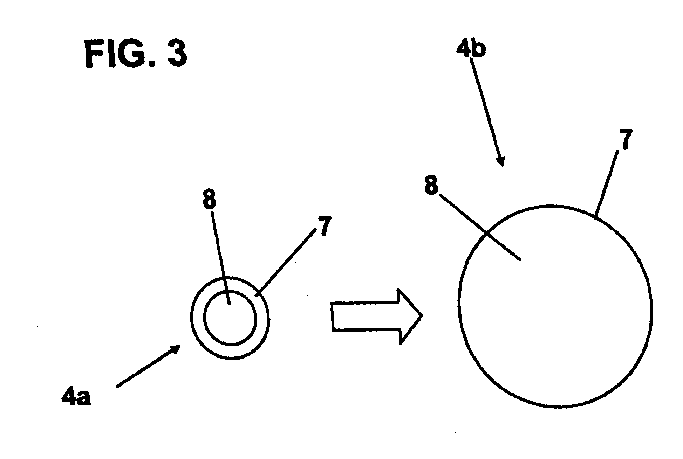

Fig. 3 zeigt in Gegenüberstellung eine nicht expandierte Mikrosphäre 4a und eine expandierte Mikrosphäre 4b. Die nicht expandierte Mikrosphäre 4a besteht aus der Polymerhülle 7, welche eine Dicke von ca. 2 µm aufweist. Der Durchmesser der gesamten Mikrosphäre 4a beträgt dabei ca. 6 - 45 µm. Die Dichte von unexpandierten Mikrosphären 4a beträgt ca. 1.100 - 1300 kg/m³. Durch Einwirkung von Hitze (welche durch den Pfeil dargestellt ist) expandiert die Füllsubstanz 8 in den Mikrosphären 4a, wodurch sich die Mikrosphäre 4b aufbläht und dann einen Durchmesser von bis zu 200 µm aufweist. Die Polymerhülle 7 hat dabei eine Dicke von nur mehr ca. 0,1 µm und die Dichte dieser Mikrosphäre 4b beträgt nach der Expansion nur mehr ca. 30 kg/m³.

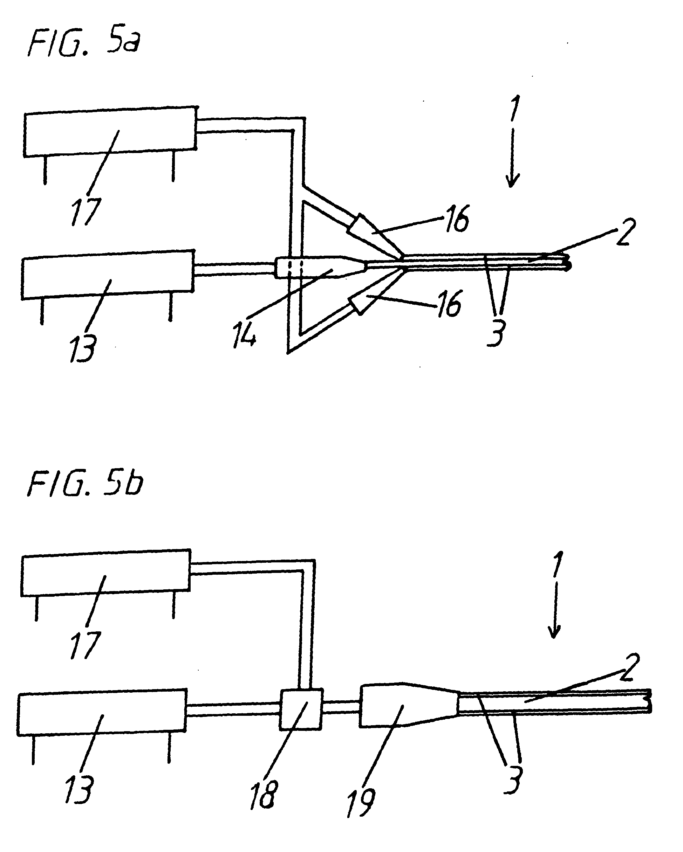

Fig. 5a zeigt den schematischen Ablauf einer ersten Art der beidseitigen Koextrusion. Im Extruder 13 befindet sich dabei die Grundmasse 5 mit den Mikrosphären 4 (nicht dargestellt) welche durch die Breitschlitzdüse 14 aufgeformt wird. Aus dem Extruder 17 wird beispielsweise Polypropylen (ohne Mikrosphären) über die Beschichtungsdüsen 16 als Verbundschicht 3 auf die Kernschicht 2 koextrudiert.

Fig. 5b zeigt den schematischen Ablauf einer zweiten Art der beidseitigen Koextrusion. Hierbei legt der Adapter 18 die aus den Extrudern 17 bzw. 13 stammenden Massen übereinander, wonach diese Masse durch die Koextrusionsdüse 19 zu einer gemeinsamen Verbundplatte 1 ausgeformt wird, welche eine Kernschicht 2 und zumindest eine koextrudierte Verbundschicht 3 aufweist.

Im Folgenden wird der gesamte Verfahrensablauf detaillierter beschrieben, wobei vor allem der Einsatz einer Doppelbandpresse (Bezugszeichen 20) wichtig ist, da durch eine normale, schlichte Andruckwalze nur eine einseitige Lamination möglich ist, wohingegen durch die Doppelbandpresse 20 ein beidseitiges Laminieren der Kernschicht 2 mit unterschiedlichsten Verbundschichten 3 möglich ist.

In einer Doppelbandpresse sollte die Eintrittswalze auf ca. 200°C und die erste Zone auf ca. 180°C temperiert sein, um die Verklebung der laminierten Schichten auf den mikrosphärengetriebenen Schaum zu gewährleisten. Für die anschließende Kühlung der Materialmenge von 1500 kg/h ist eine entsprechende Anzahl an Kühlzonen in der Doppelbandpresse notwendig (beides nicht detailliert in Fig. 4 dargestellt). Außerdem können mit Hilfe von 3 Düsen und zusätzlichen Speisewalzen (von denen Alufolien, Glas, Kunststofffolien oder Ähnliches zulaminiert werden) Mehrschichtverbunde hergestellt werden und direkt in die Doppelbandpresse geführt werden.

Platten mit 1400 mm Breite und bis zu 60 mm Dicke, extrudiert aus einer Breitschlitzdüse, erfordern Massedurchsätze bis zu 1500 kg/h, die bei der Herstellung von Profilen und Folien (siehe DE 699 25 919) nicht erzielt werden. Diese Materialmenge wird in einer Breitschlitzdüse verteilt und vorgeformt und anschließend in einer Doppelbandpresse endgeformt, stabilisiert und gekühlt. Um solche Dimensionen in einem Extrusionsverfahren umsetzen zu können, sollte die Polymermischung über eine Scherviskosität verfügen, die bei 200°C Massetemperatur und einer Schergeschwindigkeit von 100 1/s bei mindestens 100 Pas liegt. Mit 30 Pas Scherviskosität bei 175 °c, wie in der DE 699 25 919 erwähnt, sind dicke Schaumplatten nicht zu fertigen.

Nur mittels dieser Technologie der beheizbaren Doppelbandpresse, gezielter Temperaturführung für eine optimale Verklebung der Schichten und intelligenter Sandwichbauweise können biegesteife, dicke Platten hergestellt werden. Durch die stabile Schaumkernschicht mit Druckspannung von > 12 MPa bei 10 % Stauchung und einem Biegemodul von 550 MPa bei 550 kg/m³ Dichte werden Biegesteifigkeiten von > 5000 Nmm pro mm Breit erreicht. Mit 0,4 mm dicken Aluminiumblechen in den Außenlagen kann diese Biegefestigkeit um bis zu 100 Mio. Nmm erhöht werden. Durch diese hohen Biegefestigkeiten können die Schaumverbundplatten tragende, konstruktive Funktionen im Baubereich und Transportwesen übernehmen.

Durch die Auswahl, die Positionierung und die Schichtdickendimensionierung der Verstärkungs- und Deckschichten lassen sich die Verbundbauplatteneigenschaften bzw. deren Materialeigenschaften einstellen.

### Beispiel 1:

Wenn eine Schaumfolie mit 1 mm Dicke (h) - wie beispielsweise aus der DE 699 25 919 bekannt - und eine reine Schaumplatte mit 30 mm aus dem selben PP-Schaum der Dichte 550 kg/m³ mit einem Biegemodul (E) von 550 N/mm² und einer Wärmeleitfähigkeit (WLF) von 0,098 W/mK bestehen, ergibt sich aufgrund der unterschiedlichen Trägheitsmomente (I=b*h³/12) der beiden Geometrien für die Folie eine Biegefestigkeit (= E*I/b) pro mm Breite (b) von 46 Nmm und für die Platte eine wesentlich höhere Steifigkeit von 1.237.500 Nmm. Ähnliches gilt für den K Wert (=WLF/h), der für die Folie 98 W/m²K und für die Platte 3,27 W/m²K beträgt. Die 30-mm-Platte hat aufgrund ihrer größeren Dicke (h) eine wesentlich höhere Tragfähigkeit und bessere Isoliereigenschaften.

### Beispiel 2:

Es liegt ein Plattenaufbau gemäß Fig. 2b vor, der Aluminiumbleche mit einem Elastizitätsmodul von 75 000 N/mm² als Verstärkungslagen und PP-Schaum der Dichte 550 kg/m³ und mit einem Biegemodul von 550 N/mm² als Kernmaterial aufweist. Wird 0,4 mm starkes Aluminium verwendet, hat eine 18 mm dicke Verbundplatte einen Biegemodul von 6200 N/mm². Wird 0,6 mm starkes Aluminium verwendet, hat eine 18 mm dicke Verbundplatte einen Biegemodul von 8500 N/mm². Wird 1 mm starkes Aluminium verwendet, hat eine 18 mm dicke Verbundplatte einen Biegemodul von 13.000 N/mm². Für die Biegesteifigkeiten pro mm Breite ergeben sich je nach Stärke des Aluminiums die Werte 3 Mio., 4,1 Mio. und 6,3 Mio. Nmm. D.h. bei gleicher Plattendicke kann durch die Schichtdicke des Aluminiums die Biegesteifigkeit und somit die Tragfähigkeit der Verbundplatte erheblich beeinflusst werden.

### Beispiel 3:

Es liegt ein Plattenaufbau gemäß Fig. 2c vor, der 0,4 mm dicke Aluminiumbleche mit einem Elastizitätsmodul von 75 000 N/mm² als Verstärkungslagen, PP-Schaum der Dichte 450 kg/m³ und mit einem Biegemodul von 380 N/mm² als Kernmaterial und einer Decklage aus 1,5 mm dicken Polypropylen mit einem Elastizitätsmodul von 1200 N/m² aufweist. Der gesamte Verbund hat 20 mm Dicke, einen Biegemodul von 4200 N/mm², somit eine Biegesteifigkeiten pro mm Breite von 2,87 Mio. Nmm und ein Gewicht von 12 kg/m². Eine im Einsatz befindliche, 20 mm dicke Sperrholzplatte hat in etwa die gleiche Biegesteifigkeit wie der Plattenaufbau 2c, wiegt aber 15,6 kg/m². Eine Polypropylen Kompaktplatte muss 33 mm dick sein, um die gleichen Biegesteifigkeiten zu erzielen. Das Gewicht dieser Platte beträgt 29,7 kg/m². Die Sandwichkonstruktion weist also das beste und dauerhafteste Verhältnis von Biegesteifigkeit und Gewicht auf. Die Betonung liegt hierbei auch auf dauerhaft. Im Gegensatz zur Sperrholzplatte, deren mechanische Eigenschaften aufgrund von Delamination und Aufquellen infolge von Bearbeitung und Witterungseinflüssen nachlassen, bleiben jene Eigenschaften bei der Kunststoffplatte erhalten.

Aus den genannten Gründen eignen sich die 5-Schicht-Sandwichplatten besonders gut als Schaltafeln in Betonschalungselementen und als Boden- und Seitenwände in Aufbauten für das Transportwesen. Im Einbau wird weniger Kraftaufwand benötigt, die Platten müssen weniger oft ausgetauscht werden, Spritkosten können eingespart bzw. die Lademenge erhöht werden.

## Patentansprüche

1. Verbundplatte aus einer Kernschicht und mindestens einer mit der Kernschicht verbundenen Verbundschicht, wobei die Kernschicht ein geschäumter Kunststoff ist, **dadurch gekennzeichnet, dass** der geschäumte Kunststoff der Kernschicht (2) expandierte Mikrosphären (4) enthält, und beidseitig dieser Kernschicht (2) eine Verbundschicht (3) angeordnet ist, die jeweils eine Verstärkungsschicht (3b) und eine Deckschicht (3a) aufweist, wobei der Durchmesser der Mikrosphären (4) in expandiertem Zustand in der Kernschicht (2) zwischen 30 µm und 200 µm beträgt.

2. Verbundplatte nach Anspruch 1, **dadurch gekennzeichnet, dass** die Kernschicht (2) zumindest aus einer Grundmasse (5) und expandierten Mikrosphären (4) besteht.

3. Verbundplatte nach Anspruch 1 oder 2, **dadurch gekennzeichnet, dass** die Kernschicht (2) zumindest aus einer Grundmasse (5), expandierten Mikrosphären (4) und einem Trägermaterial (6) besteht.

4. Verbundplatte nach Anspruch 3, **dadurch gekennzeichnet, dass** das Trägermaterial (6) zusammen mit den Mikrosphären (4) einen Masterbatch (9) bildet.

5. Verbundplatte nach Anspruch 3 oder 4, **dadurch gekennzeichnet, dass** als Trägermaterial (6) Ethylenvinylacetat oder ähnliche niedrig schmelzende Thermoplastträgermaterialien dienen.

6. Verbundplatte nach einem der Ansprüche 1 bis 5, **dadurch gekennzeichnet, dass** die Grundmasse (5) aus einem Thermoplast, vorzugsweise Polypropylen, besteht.

7. Verbundplatte nach einem der Ansprüche 1 bis 6, **dadurch gekennzeichnet, dass** die Mikrosphären (4) eine Polymerhülle (7), welche beispielsweise aus einem thermoplastischen Kunststoff besteht, aufweisen.

8. Verbundplatte nach einem der Ansprüche 1 bis 7, **dadurch gekennzeichnet, dass** die Mikrosphären (4) mit einer ausdehnbaren flüssigen oder gasförmigen Substanz (8) gefüllt sind.

9. Verbundplatte nach einem der Ansprüche 1 bis 8, **dadurch gekennzeichnet, dass** die Kernschicht (2) extrudiert ist.

10. Verbundplatte nach einem der Ansprüche 1 bis 9, **dadurch gekennzeichnet, dass** die Kernschicht (2) eine Dicke zwischen 1 und 60 mm, vorzugsweise zwischen 6 und 30 mm aufweist.

11. Verbundplatte nach einem der Ansprüche 1 bis 10, **dadurch gekennzeichnet, dass** die Kernschicht (2) zusätzlich ein chemisches oder physikalisches Treibmittel (10) aufweist.

12. Verbundplatte nach einem der Ansprüche 1 bis 11, **dadurch gekennzeichnet, dass** die Kernschicht (2) eine Dichte von 200 bis 800 kg/m³, vorzugsweise von 300 bis 650 kg/m³, aufweist.

13. Verbundplatte nach einem der Ansprüche 1 bis 14, **dadurch gekennzeichnet, dass** die Verbundschicht (3) ein Schicht aus Metall, aus Glas oder aus Glasfasern umfasst.

14. Verbundplatte nach einem der Ansprüche 1 bis 15, **dadurch gekennzeichnet, dass** die Verbundschicht (3) eine Schicht aus einem nicht geschäumten Kunststoff, beispielsweise Polypropylen, oder einem anderen - zur Kernschicht (2) verschiedenen - Material umfasst.

15. Verbundplatte nach Anspruch 13 oder 14, **dadurch gekennzeichnet, dass** die Kernschicht (2) und/oder die Verbundschichten (3) durch Haftvermittler, durch Koextrusion oder durch Verklebevliese verbunden sind.

## Claims

1. A composite panel comprising a core layer and at least one composite layer connected to the core layer, wherein the core layer is a foamed plastic, **characterised in that** the foamed plastic of the core layer (2) contains expanded microspheres (4) and arranged on both sides of the core layer (2) is a composite layer (3) respectively having a reinforcing layer (3b) and a cover layer (3a), wherein the diameter of the microspheres (4) in the expanded condition in the core layer (2) is between 30 µm and 200 µm.

2. A composite panel according to claim 1 **characterised in that** the core layer (2) comprises at least a base material (5) and expanded microspheres (4).

3. A composite panel according to claim 1 or claim 2 **characterised in that** the core layer (2) comprises at least a base material (5), expanded microspheres (4) and a carrier material (6).

4. A composite panel according to claim 3 **characterised in that** the carrier material (6) together with the microspheres (4) forms a masterbatch (9).

5. A composite panel according to claim 3 or claim 4 **characterised in that** ethylene vinyl acetate or similar low-melting thermoplastic carrier materials serve as the carrier material (6).

6. A composite panel according to one of claims 1 to 5 **characterised in that** the base material (5) comprises a thermoplastic material, preferably polypropylene.

7. A composite panel according to one of claims 1 to 6 **characterised in that** the microspheres (4) have a polymer casing (7) which for example comprises a thermoplastic material.

8. A composite panel according to one of claims 1 to 7 **characterised in that** the microspheres (4) are filled with an expandable liquid or gaseous substance (8).

9. A composite panel according to one of claims 1 to 8 **characterised in that** the core layer (2) is extruded.

10. A composite panel according to one of claims 1 to 9 **characterised in that** the core layer (2) is of a thickness of between 1 and 60 mm, preferably between 6 and 30 mm.

11. A composite panel according to one of claims 1 to 10 **characterised in that** the core layer (2) additionally has a chemical or physical blowing agent (10).

12. A composite panel according to one of claims 1 to 11 **characterised in that** the core layer (2) is of a density of 200 to 800 kg/m³, preferably 300 to 650 kg/m³.

13. A composite panel according to one of claims 1 to 14 **characterised in that** the composite layer (3) includes a layer of metal, glass or glass fibres.

14. A composite panel according to one of claims 1 to 15 **characterised in that** the composite layer (3) includes a layer comprising a non-foamed plastic, for example polypropylene, or another material different from the core layer (2).

15. A composite panel according to claim 13 or claim 14 **characterised in that** the core layer (2) and/or the composite layers (3) are connected by bonding agents, by co-extrusion or by non-woven adhesive fabrics.

## Revendications

1. Plaque composite constituée d'une couche de coeur et d'au moins une couche composite liée à la couche de coeur, la couche de coeur étant une matière plastique moussée, **caractérisée en ce que** la matière plastique moussée de la couche de coeur (2) contient des microsphères (4) expansées, et **en ce que**, des deux côtés de cette couche de coeur (2), il est disposé une couche composite (3) qui présente respectivement une couche de renfort (3b) et une couche de couverture (3a), le diamètre des microsphères (4) dans l'état expansé dans la couche de coeur (2) étant compris entre 30 µm et 200 µm.

2. Plaque composite selon la revendication 1, **caractérisée en ce que** la couche de coeur (2) est constituée au moins par une masse de base (5) et par des microsphères (4) expansées.

3. Plaque composite selon la revendication 1 ou 2, **caractérisée en ce que** la couche de coeur (2) est constituée au moins par une masse de base (5), par des microsphères (4) expansées et par un matériau porteur (6).

4. Plaque composite selon la revendication 3, **caractérisée en ce que** le matériau porteur (6) forme, avec les microsphères (4), un mélange maître (9).

5. Plaque composite selon la revendication 3 ou 4, **caractérisée en ce que**, en tant que matériau porteur (6), on utilise de l'éthylène-acétate de vinyle ou des matériaux porteurs thermoplastiques à bas point de fusion similaires.

6. Plaque composite selon l'une des revendications 1 à 5, **caractérisée en ce que** la masse de base (5) est constituée par un thermoplastique, de préférence par du polypropylène.

7. Plaque composite selon l'une des revendications 1 à 6, **caractérisée en ce que** les microsphères (4) présentent une enveloppe polymère (7) qui est constituée par exemple par une matière plastique thermoplastique.

8. Plaque composite selon l'une des revendications 1 à 7, **caractérisée en ce que** les microsphères (4) sont remplies d'une substance liquide ou gazeuse expansible.

9. Plaque composite selon l'une des revendications 1 à 8, **caractérisée en ce que** la couche de coeur (2) est extrudée.

10. Plaque composite selon l'une des revendications 1 à 9, **caractérisée en ce que** la couche de coeur (2) présente une épaisseur entre 1 et 60 mm, de préférence entre 6 et 30 mm.

11. Plaque composite selon l'une des revendications 1 à 10, **caractérisée en ce que** la couche de coeur (2) présente en plus un agent moussant (10) chimique ou physique.

12. Plaque composite selon l'une des revendications 1 à 11, **caractérisée en ce que** la couche de coeur (2) présente une masse volumique de 200 à 800 kg/m³, de préférence de 300 à 650 kg/m³.

13. Plaque composite selon l'une des revendications 1 à 14, **caractérisée en ce que** la couche composite (3) comprend une couche en métal, en verre ou en fibres de verre.

14. Plaque composite selon l'une des revendications 1 à 15, **caractérisée en ce que** la couche composite (3) comprend une couche en une matière plastique non moussée, par exemple en polypropylène, ou en un autre matériau, différent de la couche de coeur (2).

15. Plaque composite selon la revendication 13 ou 14, **caractérisée en ce que** la couche de coeur (2) et/ou les couches composites (3) sont liées par des agents adhésifs, par co-extrusion ou par des non tissés adhésifs.
